# EUROPÄISCHE PATENTSCHRIFT

(11) **EP 3 899 671 B1**
(45) Veröffentlichungstag und Bekanntmachung des Hinweises auf die Patenterteilung: **24.05.2023**
(21) Anmeldenummer: 19794476.2
(22) Anmeldetag: 22.10.2019
(51) Int. Cl.: G05B 19/042, G05B 17/02

(54) **VERFAHREN UND VORRICHTUNG ZUM AUSLEGEN EINER FELDGERÄTSTATION**
METHOD AND DEVICE FOR DESIGNING A FIELD DEVICE STATION
PROCÉDÉ ET DISPOSITIF DE CONFIGURATION D'UN POSTE D'APPAREIL DE TERRAIN

(30) Priorität: 21.12.2018 DE 102018133428
(43) Veröffentlichungstag der Anmeldung: 27.10.2021
(73) Patentinhaber: Samson Aktiengesellschaft, 60314 Frankfurt am Main (DE)
(72) Erfinder: WAGNER-STÜRZ, David, 64367 Mühltal (DE)
(74) Vertreter: Schmid, Nils T.F.
(86) Internationale Anmeldenummer: PCT/EP2019/078729
(87) Internationale Veröffentlichungsnummer: WO 2020/126162

(56) Entgegenhaltungen:
- EP-A1- 3 079 028
- WO-A1-2018/162203
- US-A1- 2004 078 182

## Beschreibung

Die vorliegende Erfindung betrifft ein Verfahren zum Auslegen einer Feldgerätstation, wie einer Stellarmatur, einer Pumpe oder dergleichen, für eine prozesstechnische Anlage, wie eine chemische Anlage, eine Lebensmittel verarbeitende Anlage, ein Kraftwerk oder dergleichen. Außerdem betrifft die vorliegende Erfindung einen Datenträger, der Befehle aufweist, die, wenn sie von einer Rechenführung ausgeführt werden, die Rechenvorrichtung zum Ausführen des erfindungsgemäßen Verfahrens einrichten. Die vorliegende Erfindung betrifft auch eine Rechenvorrichtung, die zum Durchführen des erfindungsgemäßen Verfahrens ausgebildet ist. Ferner stellt die vorliegende Erfindung ein Simulationssystem bereit.

EP 2 175 332 A2 lehrt ein besser standardisiertes und stabilisiertes Steuerungs- und Regelverfahren für eine prozesstechnische Anlage. Dabei macht sich das Steuerungsund Regelverfahren das Modell der prädikativen Regelung zunutze. Mithilfe dieses Verfahrens ist es jedoch nur möglich, ein festes Simulationsmodell, welches eine konkrete prozesstechnische Anlage virtuell abbildet, zu beeinflussen und damit den Betrieb der prozesstechnischen Anlage zu optimieren. Es ist allerdings nicht möglich, bereits vor Inbetriebnahme der prozesstechnischen Anlage die in die prozesstechnische Anlage zu integrierenden Feldgeräte mittels des Simulationsmodells auswählbar zu machen, sodass ein Feldgerät für einen möglichst optimalen Betrieb der konkreten prozesstechnischen Anlage bestimmt werden kann. Daher sind bei bekannten Anlagen-Simulationsmodellen weiterhin aufwendige Steuerungs- und Regeleingriffe während des Betriebs notwendig.

US 2004/0078182 A1 betrifft eine Simulation, die einen oder mehrere Knoten des mehrknotigen Prozesssteuerungssystems simuliert, um simulierte Prozesssteuerungs-Funktionalitäten eines verteilten Prozesssteuerungssystems bereitzustellen

EP 3 079 028 A1 betrifft ein Planung- und Engineering-Verfahren für eine Automatisierungslösung, die ein Automatisierungssystem und eine prozesstechnische Anlage umfasst

WO 2018/162203 A1 betrifft ein Verfahren zum Parametrieren eines Feldgeräts der Automatisierungstechnik, welches mit einem Server über ein erstes Kommunikationsnetzwerk in Kommunikationsverbindung steht.

Es ist eine Aufgabe der vorliegenden Erfindung, die Nachteile aus dem bekannten Stand der Technik zu verbessern, insbesondere ein Verfahren zum Auslegen einer Feldgerätstation einer prozesstechnischen Anlage bereitzustellen, mit dem der Steuerungs- und Regelaufwand während des Betriebs der prozesstechnischen Anlage reduziert ist und mit dem bereits vor Inbetriebnahme der prozesstechnischen Anlage eine Vielzahl von vorzugsweise aus einem Standardkomponenten-Baukasten auszuwählenden Feldgeräten virtuell getestet werden können, um insbesondere das optimale Feldgerät für die konkrete prozesstechnischen Anlage auswählen.

Die Aufgabe wird durch den Gegenstand des Hauptanspruchs und die Gegenstände der nebengeordneten Ansprüche gelöst. Vorteilhafte Ausführungsformen sind in den abhängigen Ansprüchen definiert.

Erfindungsgemäß ist ein Verfahren zum Auslegen einer Feldgerätstation für eine prozesstechnische Anlage gemäß Anspruch 1 angegeben.

Vorzugsweise kann die Feldgerätstation eine Stellarmatur, eine Pumpe oder dergleichen sein. Die prozesstechnische Anlage kann vorzugsweise eine chemische Anlage, eine Lebensmittel verarbeitende Anlage, ein Kraftwerk oder dergleichen sein. Es sollte jedoch verständlich sein, dass andere Arten von Feldgerätstationen und andere Arten von prozesstechnischen Anlagen vom Umfang der vorliegenden Erfindung umfasst sind. Ferner können die Anlagenmerkmalen der prozesstechnischen Anlage eine Art des Prozessmediums, eine Prozessfluidströmung, eine Anzahl von Feldgerätstationen, eine Anlagenumgebung oder dergleichen aufweisen und die vorliegende Erfindung ist nicht auf ein bestimmtes Anlagenmerkmal der prozesstechnischen Anlage beschränkt. Vorzugsweise stellen die Betriebsgrößen der prozesstechnischen Anlage eine Regelgröße, beispielsweise Temperatur, Druck, Durchfluss oder dergleichen dar. Viele weitere Betriebsgrößen der prozesstechnischen Anlage sind jedoch denkbar und die vorliegende Erfindung ist nicht auf die genannten Beispiele beschränkt. Ferner können die feldgerätspezifischen Auslegungsparameter des zu simulieren Feldgeräts einen Geometrieparameter, einen Leistungsparameter, wie eine Stellantriebskraft, eine Pumpenleistung, ein KV-Wert oder dergleichen, aufweisen und die vorliegende Erfindung ist nicht auf einen bestimmten feldgerätespezifischen Auslegungsparameter beschränkt.

Erfindungsgemäß ist vorgesehen, dass eine prozesstechnische Anlage mit der auszulegenden Feldgerätstation in einer Simulationsumgebung abbildbar ist. Dies kann erfindungsgemäß bedeuten, dass eine reale prozesstechnische Anlage mit einer realen Feldgerätstation auf eine virtuelle Ebene digital abgebildet wird, wodurch ein digitales Abbild, welches ebenfalls als ein digitaler Zwilling bezeichnet werden kann, der prozesstechnischen Anlage und der Feldgerätstation in der Simulationsumgebung bereitgestellt werden kann. Die Simulationsumgebung kann den Betrieb des digitalen Abbilds der prozesstechnischen Anlage mit dem digitalen Abbild der Feldgerätstation simulieren. Die Simulationsumgebung kann den Betrieb des digitalen Abbilds der prozesstechnischen Anlage derart simulieren, dass das simulierte Verhalten (oder die simulierten Betriebsgrößen) des digitalen Abbilds der prozesstechnischen Anlage einem Verhalten (oder Betriebsgrößen) der realen prozesstechnischen Anlage im Rahmen einer Fehlertoleranz entsprechen, sodass Ergebnisse der Simulation des digitalen Abbilds der prozesstechnischen Anlage in der Simulationsumgebung direkte Rückschlüsse auf den Betrieb der realen prozesstechnischen Anlage erlauben.

Eine Simulationsumgebung für prozesstechnische Anlagen kann in Form von Software, Hardware oder als Kombination davon implementiert sein. Beispielsweise kann auf einer oder mehreren Rechenvorrichtungen eine Simulationslogik spezifiziert sein, welche die Simulationsumgebung bereitstellt. Die Simulationslogik kann zumindest teilweise als Software oder als spezialisierte Hardware realisiert sein. Die Simulationslogik kann ferner über die eine oder mehreren Rechenvorrichtungen verteilt sein. Beispielsweise können Teile der Simulationslogik in einer dezentralen oder verteilten Rechenumgebung, welche ebenfalls als eine Cloud bezeichnet werden kann, realisiert sein.

Erfindungsgemäß ist vorgesehen, dass in der Simulationsumgebung ein Feldgerätmodul bereitgestellt ist, welches wenigstens einen Abschnitt der abgebildeten Feldgerätstation simuliert. Das Feldgerätmodul ist hierbei nicht auf ein einzelnes Feldgerät beschränkt, sondern ermöglicht die Simulation einer Vielzahl von Feldgeräten aus der Gruppe von Feldgeräten. Das Feldgerätmodul kann somit als ein Baukasten verstanden werden, der eine Simulation der Vielzahl von Feldgeräten in der prozesstechnischen Anlage ermöglicht, um eine optimale Auslegung der Feldgerätestation zu erreichen. Für eine konkrete Simulation des Betriebs des digitalen Abbilds der prozesstechnischen Anlage wird das Feldgerätmodul auf ein zu simulierendes Feldgerät aus der Gruppe von Feldgeräten festgelegt, wodurch zugehörige feldgerätspezifische Auslegungsparameter definiert werden, welche wenigstens eine Betriebsgröße des digitalen Abbilds der Feldgerätstation und somit wenigstens eine Betriebsgröße des digitalen Abbilds der prozesstechnischen Anlage bei der Simulation des Betriebs beeinflussen. Ferner kann vorzugsweise für eine konkrete Simulation des Betriebs des digitalen Abbilds der prozesstechnischen Anlage das Feldgerätmodul auf mindestens ein zu simulierendes Feldgerät, ein oder mehrere zu simulierende Feldgeräte, oder eine Vielzahl zu simulierende Feldgeräte aus der Gruppe von Feldgeräten festgelegt werden, wodurch den jeweiligen Feldgeräten zugehörige oder den mehreren ausgewählten Feldgeräten zugehörige feldgerätspezifische Auslegungsparameter definiert sein können, welche dann entsprechend wenigstens eine Betriebsgröße, eine oder mehrere Betriebsgrößen, beziehungsweise eine Vielzahl von Betriebsgrößen des digitalen Abbilds der Feldgerätstation und somit wenigstens eine Betriebsgröße des digitalen Abbilds der prozesstechnischen Anlage bei der Simulation des Betriebs beeinflussen. Vorzugsweise kann durch eine Variation von einem oder mehreren feldgerätspezifischen Auslegungsparametern und ggf. weiterer Regelparameter in jeweils definierten Bereichen und unter Berücksichtigung von Randbedingungen eine Betriebsgröße ermittelt werden, welche unter geeigneten Kriterien, beispielsweise eine Fehlerminimierung eines Regelsignals, Reduzierung von Pegeln, unter oder Überschreiben eines Schwellwert und dergleichen, als optimal betrachtet werden kann.

Die Simulation des digitalen Abbilds der prozesstechnischen Anlage dient entsprechend als Grundlage zur Ermittlung von optimalen Betriebsgrößen, welche nachfolgend herangezogen werden können, um ein für die auszulegende Feldgerätstation geeignetes Feldgerät aus der von dem Feldgerätmodul repräsentierten Gruppe von Feldgeräten auszuwählen. Die Auswahl erfolgt anhand eines Vergleichs der ermittelten Betriebsgröße mit einer Bewertungsbetriebsgröße. Die Gruppe von Feldgeräten kann als eine Gruppe von Standardgeräten definiert sein oder einen oder mehrere Standardgeräte aufweisen. Vorzugsweise kann ein solches Standardfeldgerät oder ein beliebig anderes in der Gruppe definiertes Feldgerät aus der Gruppe gewählt werden, welches Kriterien erfüllt, die durch die Bewertungsbetriebsgröße angegeben sind, oder welches feldgerätspezifische Auslegungsparameter aufweist, die nahe der ermittelten optimalen Betriebsgröße oder der Bewertungsbetriebsgröße liegen. Zusätzlich oder alternativ kann die Bewertungsbetriebsgröße eine bisher optimale Betriebsgröße des digitalen Abbilds der prozesstechnischen Anlage angeben und ein simuliertes Feldgerät kann dann als geeignet ausgewählt werden, wenn die zugehörigen ermittelten Betriebsgrößen die bisher optimale Betriebsgröße übertreffen. Weitere vergleichsbasierte Auswahlkriterien sind denkbar und von der vorliegenden Erfindung mit umfasst. Die Gruppe von Feldgeräten kann somit einerseits einen möglichen Simulationsbereich für die in der Gruppe definierten Feldgeräte und andererseits das geeignete Feldgerät zur optimalen Auslegung der Feldgerätstation definieren.

Durch das vorteilhafte Bereitstellen des Feldgerätmoduls zur Simulation einer Gruppe von mehreren Feldgeräten ist die Simulationsumgebung nicht auf ein bestimmtes digitales Abbild eines Feldgerät beschränkt, sondern kann anhand des Feldgerätmoduls besonders schnell und einfach eine Simulation eines breiten Auslegungsbereichs vornehmen, der durch die Gruppe der von dem Feldgerätmodul repräsentierten Feldgeräte definiert ist. Indem die Simulationsumgebung lediglich zur Interaktion mit dem Feldgerätmodul ausgelegt sein kann, erfordert die Simulationsumgebung keine Kenntnis über eine Anzahl oder Art der durch das Feldgerätmodul repräsentierten Feldgeräte. Dies führt zu einem besonders anpassbaren und austauschbaren Simulations- und Optimierungsansatz und schlussendlich zu einer effektiven optimalen Auslegung der Feldgerätstation für den Betrieb in der realen prozesstechnischen Anlage.

Das erfindungsgemäße Feldgerätmodul ermöglicht im Hinblick auf eine Gruppe von bekannten Feldgeräten oder Standardfeldgeräten eine optimale Auslegung der Feldgerätestation, indem ein breiter Auslegungsbereich, der durch die Gruppe von Feldgeräten gestützt wird, der Simulation zugrunde gelegt werden kann. Hierzu kann die Gruppe der Feldgeräte im Feldgerätmodul spezifiziert und so flexibel in die Simulationsumgebung eingesetzt werden, um die optimale Auslegung der Feldgerätstation basierend auf dem verfügbaren Auslegungsbereich zu bestimmen.

Gemäß einer vorteilhaften Ausführungsform der Erfindung unterscheiden sich die Feldgeräte aus der Gruppe von Feldgeräten in einem oder mehreren feldgerätspezifischen Auslegungsparametern. Entsprechend legen die Feldgeräte aus der Gruppe einen Auslegungsbereich fest, der im Rahmen der Simulation des Betriebs der prozesstechnischen Anlage auf optimale Konfigurationen hin bewertet werden kann. Dies ermöglicht eine flexible Definition des Auslegungsbereichs der von dem durch das Feldgerätmodul repräsentierten Feldgeräten definiert ist und der ausgenutzt werden kann, um ein optimales Feldgerät für die auszulegende Feldgerätstation zu ermitteln.

In einer Ausführungsform umfasst das Verfahren ein wiederholtes Festlegen des Feldgerätmoduls auf ein weiteres zu simulierendes Feldgerät aus der Gruppe von Feldgeräten und mindestens einen zugehörigen feldgerätspezifischen Auslegungsparameter des weiteren Feldgeräts und wiederholtes Simulieren des Betriebs der abgebildeten prozesstechnischen Anlage und der auszulegenden Feldgerätstation unter Verwendung des wiederholt festgelegten Feldgerätmoduls. Vorzugsweise kann das Festlegen des Feldgerätmoduls iterativ erfolgen, wodurch ein Simulieren des Betriebs des digitalen Abbilds der prozesstechnischen Anlage und der auszulegenden Feldgerätstation in der Simulationsumgebung angestoßen werden kann. Zusätzlich kann das Feldgerätmodul auf mehrere Feldgeräte aus der Gruppe von Feldgeräten festgelegt werden, wodurch eine höhere Variabilität des Auslegungsbereichs für die Simulation anhand der zugehörigen feldgerätspezifischen Auslegungsparameter der mehreren Feldgeräte festgelegt werden kann. Die Auswahl des mindestens einen zu simulierenden Feldgeräts kann beispielsweise deterministisch gemäß einer Reihenfolge der Definition der Feldgeräte in der Gruppe oder zufällig erfolgen. Alternativ oder zusätzlich kann die Auswahl des mindestens einen zu simulierenden Feldgeräts anhand der entsprechenden feldgerätspezifischen Auslegungsparameter und/oder der betriebsspezifischen Anlagenmerkmale der prozesstechnischen Anlage und/oder der betriebsspezifischen Merkmale der auszulegenden Feldgerätstation und/oder beliebiger weiterer Parameter, welche aus der Konfiguration der realen prozesstechnischen Anlage oder der Feldgerätstation oder aus der Konfiguration des digitalen Abbilds der realen prozesstechnischen Anlage oder der Feldgerätstation, in beliebiger Kombination, ermittelt werden. Ferner kann die Auswahl anhand einer früheren Simulation der prozesstechnischen Anlage in der Simulationsumgebung und den hierbei ermittelten Betriebsgrößen erfolgen. Das Festlegen des Feldgerätmoduls auf mindestens ein weiteres zu simulierendes Feldgerät kann abgebrochen werden, um das für die auszulegende Feldgerätstation geeignetes Feldgerät auszuwählen, wenn ein Vergleich der ermittelten Betriebsgröße mit früheren ermittelten Betriebsgrößen keine Verbesserung bringt, sodass davon ausgegangen werden kann, dass die bereits simulierten Feldgeräte den Auslegungsbereich abdecken und so eine Teilgruppe von potentiell geeigneten Feldgeräten bilden. Hierdurch kann besonders vorteilhaft und schnell das geeignete Feldgerät zur optimalen Auslegung der Feldgerätstation ermittelt werden.

In einer weiteren Ausführungsform weist das Feldgerätmodul eine Schnittstelle zur Simulationsumgebung auf, welche für das Festlegen des Feldgerätmoduls auf ein zu simulierendes Feldgerät und auf mindestens einen zugehörigen feldgerätspezifischen Auslegungsparameter eingerichtet ist. Entsprechend kann die Simulationsumgebung über die Schnittstelle das Feldgerätmodul anweisen, ein zu simulierendes Feldgerät festzulegen. Beispielsweise kann die Simulationsumgebung eine Oberfläche für Benutzer bereitstellen, welche eine Auswahl des zu simulierenden Feldgeräts vornehmen können. Die Auswahl kann über die Schnittstelle an das Feldgerätmodul weitergegeben werden. Es sollte jedoch verständlich sein, dass die Auswahl des zu simulierenden Feldgeräts keinesfalls eine Benutzerinteraktion erfordern muss und vielmehr vollautomatisch erfolgen kann. Durch das Bereitstellen von Schnittstellen kann das Feldgerätmodul ferner flexibel in jeder Simulationsumgebung mit passenden Schnittstellen einsetzbar sein.

Gemäß einer weiteren Ausführungsform umfasst das Verfahren ferner ein Speichern, für jedes zu simulierende Feldgerät, der für das zu simulierende Feldgerät ermittelten wenigstens einen Betriebsgröße der abgebildeten prozesstechnischen Anlage und, vorzugsweise, einer Zuordnung des zu simulierenden Feldgeräts zu der ermittelten wenigstens einen Betriebsgröße. Vorzugsweise weist das Auswählen des geeigneten Feldgeräts aus der Gruppe von Feldgeräten ferner ein Vergleichen der gespeicherten Betriebsgrößen mit der Bewertungsbetriebsgröße auf. Ferner weist das Auswählen vorzugsweise ein Ermitteln einer optimalen Betriebsgröße auf der Grundlage der gespeicherten Betriebsgrößen und ein Auswählen des der optimalen Betriebsgröße zugeordneten Feldgeräts als das geeignete Feldgerät auf. Durch die gespeicherten Betriebsgrößen und gegebenenfalls die gespeicherten Zuordnungen kann anschließend effektiv dasjenige Feldgerät aus der Gruppe von Feldgeräten ausgewählt werden, welches für die auszulegende Feldgerätstation geeignet ist, beispielsweise in dem Sinne dass es einem in der Simulation bestimmten optimalen Betriebszustand der prozesstechnischen Anlage und/oder der Feldgerätstation nahe kommt, und so eine optimale Auslegung der Feldgerätstation ermöglicht.

Gemäß einer Ausführungsform weist das Feldgerätmodul eine weitere Schnittstelle zur Simulationsumgebung auf, welche für eine Übergabe des mindestens einen feldgerätspezifischen Auslegungsparameters an die Simulationsumgebung eingerichtet ist. Die Simulationsumgebung kann die für das mindestens eine zu simulierende Feldgerät spezifischen Auslegungsparameter über das Feldgerätmodul anfordern. Die Simulationsumgebung verwendet die feldgerätspezifischen Auslegungsparametern, um einen Auslegungsbereich zu bestimmen und so die Simulation des digitalen Abbilds der Feldgerätstation und/oder der prozesstechnischen Anlage zu parametrieren. Für die Simulationsumgebung erscheint das Feldgerätmodul als ein digitales Abbild eines Feldgeräts mit einem bestimmten Auslegungsbereich, welches über standardisierte Schnittstellen abgefragt und/oder parametriert werden kann. Die weitere Schnittstelle des Feldgerätmoduls ist vorzugsweise derart ausgestaltet, dass sie den Schnittstellenanforderungen der Simulationsumgebung genügt. Das Feldgerätmodul kann eine Vielzahl weiterer Schnittstellen zur Kommunikation mit Simulationsumgebungen bereitstellen. Hierdurch kann das Feldgerätmodul in unterschiedlichen Simulationsumgebungen mit unterschiedlichen Schnittstellenanforderungen einsetzbar sein.

In einer Ausführungsform weist das Feldgerätmodul ferner Logik zum Simulieren des wenigstens einen Feldgeräts aus der Gruppe von Feldgeräten auf, wobei simulierte Betriebsgrößen des wenigstens einen Feldgerätes und/oder der abgebildeten prozesstechnischen Anlage über eine Simulationsschnittstelle des Feldgerätmoduls zwischen dem Feldgerätmodul und der Simulationsumgebung austauschbar sind. Das Feldgerätmodul kann daher über eine reine feldgerätspezifische Parametrierung der Simulation hinaus selbstständig den Betrieb der Feldgeräte aus der Gruppe von Feldgeräten simulieren. Hierzu kann das Feldgerätmodul über eine Schnittstelle aktuelle Betriebsgrößen des digitalen Abbilds der prozesstechnischen Anlage (oder der Feldgerätstation) von der Simulationsumgebung erhalten, das Verhalten des mindestens einen zu simulierenden Feldgeräts simulieren und die resultierenden Betriebsparameter des Feldgeräts an die Simulationsumgebung übergeben. Ferner kann das Feldgerätmodul im Rahmen des verfügbaren Auslegungsbereichs die feldgerätspezifischen Auslegungsparameter variieren, um so einen optimalen Betriebszustand zu ermitteln. Diesbezüglich kann das Feldgerätmodul von der Simulationsumgebung über die Simulationsschnittstelle geeignete Parameter oder eine Rückmeldung über den resultierenden Betriebszustand des Feldgerätmoduls und/oder der prozesstechnischen Anlage erhalten. Das Feldgerätmodul kann somit als eine Plug-In-Lösung für die Simulationsumgebung bereitgestellt sein, sodass die Simulationsumgebung keine weitere Logik zur Simulation der Feldgeräte bereitstellen muss.

In einer bevorzugten Ausführungsform weist das Feldgerätmodul mindestens eine Speicherstruktur auf, welche Daten bereitstellt, welche die Feldgeräte aus der Gruppe von Feldgeräten spezifizieren. Die Speicherstruktur kann in Form eines Arrays, einer Tabelle oder einer Matrix angegeben sein und so die Vielzahl von Feldgeräten, welche durch das Feldgerätmodul repräsentiert sind, spezifizieren. Die Speicherstruktur kann über einen ersten Index angesprochen werden, über den ein Feldgerät ausgewählt werden kann. Über einen zweiten Index kann ein Parameter oder ein Parameterbereich des Feldgeräts abgerufen werden. Vorzugsweise spezifizieren die Daten der Speicherstruktur die feldgerätspezifischen Auslegungsparameter für jeweilige Feldgeräte. Die Daten der Speicherstruktur können alternativ oder zusätzlich als funktionale Daten definiert sein und beispielsweise eine Einsprungstelle einer Funktion definieren, welche bei Aufruf die jeweiligen Parameter und Parameterbereiche generiert. Weitere Ausgestaltungen der Speicherstruktur sind denkbar und können sowohl an eine hardwareseitige oder softwaretechnische Struktur des Feldgerätmoduls als auch an Anforderungen der Simulationsumgebung angepasst sein.

Gemäß einer weiteren Ausführungsform spezifiziert die Speicherstruktur ferner eine Logik zum Simulieren der jeweiligen Feldgeräte aus der Gruppe von Feldgeräten. Die Logik kann als ein Satz von Funktionen definiert sein, welche für einen Eingabesatz von Betriebsgrößen des digitalen Abbilds der Feldgerätstation und/oder der prozesstechnischen Anlage den Betrieb der jeweiligen Feldgeräte simulieren und entsprechende Betriebsgrößen der simulierten Feldgeräte als einen Ausgabesatz bereitstellen. Die Betriebsgrößen des Ausgabesatzes können von der Simulationsumgebung zum Simulieren und Optimieren des digitalen Abbilds der Feldgerätstation und/oder der prozesstechnischen Anlage verwendet werden.

In einer bevorzugten Ausführungsform ist das Feldgerätmodul eingerichtet, sich selbst auf ein zu simulierendes Feldgerät aus der Gruppe von Feldgeräten und mindestens einen zugehörigen feldgerätspezifischen Auslegungsparameter des Feldgeräts festzulegen. Das Feldgerätmodul kann daher eingerichtet sein, selbstständig das zu simulierendes Feldgerät festzulegen, sodass das Feldgerätmodul die Ermittlung der Betriebsgrößen für die jeweiligen Feldgeräte in der Simulationsumgebung selbstständig steuern kann.

Erfindungsgemäß legt das Feldgerätmodul iterativ zu simulierende Feldgeräte aus der Gruppe von Feldgeräten fest und wählt das geeignete Feldgerät auf der Grundlage eines Vergleichs der ermittelten Betriebsgröße automatisch aus. Das erfindungsgemäße Feldgeräte Modul kann somit auf der Grundlage einer geeigneten Simulationsumgebung selbstständig die Simulation des Betriebs für eine Vielzahl von Feldgeräten Steuern und vollautomatisch ein geeignetes Feldgerät aus der Gruppe von Feldgeräten bestimmen, wodurch eine vollautomatische optimale Auslegung der Feldgerätstation erreicht werden kann.

Gemäß einer weiteren Ausführungsform erfolgt das Auswählen des geeigneten Feldgeräts und/oder ein Optimieren der Parameter mittels einer selbstoptimierenden und selbstlernenden Logik erfolgt. Vorzugsweise weist das Feldgerätmodul eine Schnittstelle zu einer verteilten Rechenumgebung auf, welche eingerichtet ist, zumindest teilweise die jeweiligen Feldgeräte aus der Gruppe von Feldgeräten zu simulieren. Die selbstoptimierende und selbstlernende Logik kann ganz oder teilweise in dem Feldgerätmodul, in der Simulationsumgebung und/oder in der verteilten Rechenumgebung bereitgestellt sein. Die selbstoptimierende und selbstlernende Logik kann durch ein Training derart eingerichtet sein, dass für einen Satz von betriebsspezifischen Merkmalen oder Parametern eines digitalen Abbilds der prozesstechnischen Anlage und/oder der Feldgerätstation ein geeignetes Feldgerät als Startpunkt für eine Simulation und eine Optimierung ausgewählt werden kann. Ferner kann über die selbstoptimierende und selbstlernende Logik die Auswahl mindestens eines weiteren Feldgeräts für eine Simulation erfolgen, derart, dass zu erwarten ist, dass die ermittelte Betriebsgröße auf ein Optimum zustrebt. Die selbstoptimierende und selbstlernende Logik kann für die Gruppe von Feldgeräten vorab trainiert werden und ferner durch Rückkopplung der Ergebnisse der derzeit ermittelten optimalen Betriebsgrößen der Simulation an Gegebenheiten der Feldgerätstation und/oder der prozesstechnischen Anlage angepasst werden, sodass zukünftige Simulationen effizienter, d.h., ressourcensparender und effektiver, durchgeführt werden können.

Die selbstoptimierende und selbstlernende Logik kann zum Teil in der verteilten Rechenumgebung als Dienst bereitgestellt sein, sodass das Feldgerätmodul über die Schnittstelle auf die selbstoptimierende und selbstlernende Logik zugreifen und entsprechende Entscheidungsprozesse auslagern kann. Alternativ oder zusätzlich kann die verteilte Rechenumgebung zumindest teilweise Logik zum Simulieren der Feldgeräte aus der Gruppe von Feldgeräten und zum Optimieren der Betriebsgrößen in einem Auslegungsbereich aufweisen. Hierdurch kann die Verarbeitung auf der lokalen Simulationsumgebung erheblich reduziert werden, wodurch Verarbeitungsressource eingespart werden können.

Gemäß einer Ausführungsform umfasst das Verfahren ein Auslegen der Feldgerätstation für die prozesstechnische Anlage auf der Grundlage des ausgewählten geeigneten Feldgeräts und/oder des mindestens einen feldgerätspezifischen Auslegungsparameters des ausgewählten geeigneten Feldgeräts. Die Simulation der durch das Feldgerätmodul repräsentierten Feldgeräte beruht somit auf Betriebsparametern eines digitalen Abbilds einer realen Feldgerätstation und/oder einer realen prozesstechnischen Anlage, welche ausschließlich auf physikalischen Gesetzen beruht. Die Ergebnisse der physikalisch-basierten Simulation, welche in Form von ermittelten Betriebsgrößen des digitalen Abbilds der prozesstechnischen Anlage und/oder der Feldgerätstation vorliegen, sind somit direkt auf einen realen Betrieb der prozesstechnischen Anlage und/oder der Feldgerätstation abbildbar, sodass durch einen Abgleich der ermittelten Betriebsgrößen ein geeignetes Feldgerät zur optimalen Auslegung der realen Feldgerätstation auswählbar ist. Sämtliche Berechnungen in der Simulationsumgebung beruhen somit auf physikalischen Parametern und/oder haben eine direkte Entsprechung in der realen Feldgerätstation und/oder der realen prozesstechnischen Anlage.

Erfindungsgemäß ist zudem ein Datenträger mit darauf gespeicherten Befehlen angegeben, wobei die Befehle, wenn sie von einem oder mehreren Prozessoren einer Rechenvorrichtung ausgeführt werden, die Rechenvorrichtung einrichten, ein Verfahren nach einem der Ansprüche 1 - 16 durchzuführen.

Erfindungsgemäß ist ferner eine Rechenvorrichtung gemäß Anspruch 18 definiert.

Die erfindungsgemäße Rechenvorrichtung kann in bevorzugten Ausführungsformen beliebige Verfahrensschritte gemäß Ausführungsformen des erfindungsgemäßen Verfahrens durchführen und/oder entsprechende Merkmale implementieren. Ferner können Ausführungsformen des erfindungsgemäßen Verfahrens derart ausgestaltet sein, dass sie Merkmale von Ausführungsformen der erfindungsgemäßen Rechenvorrichtungen bereitstellen.

Erfindungsgemäß ist ferner ein Feldgerätmodul zur Simulation wenigstens eines Abschnitts einer auszulegenden Feldgerätstation für eine prozesstechnische Anlage vorgesehen, wobei das Feldgerätmodul eine Struktur, welche Parameter zum Simulieren wenigstens eines Feldgeräts aus einer Gruppe von Feldgeräten spezifiziert, wobei die Parameter wenigstens eine Betriebsgröße der prozesstechnischen Anlage beeinflussen, und eine Schnittstelle zum Festlegen des Feldgerätmoduls auf mindestens ein zu simulierendes Feldgerät aus der Gruppe von Feldgeräten und auf mindestens einen zugehörigen feldgerätspezifischen Auslegungsparameter umfasst, wobei der Betrieb der prozesstechnischen Anlage und der auszulegenden Feldgerätstation unter Verwendung des festgelegten Feldgerätmoduls in einer Simulationsumgebung simulierbar ist, um für das zu simulierende Feldgerät wenigstens eine Betriebsgröße der prozesstechnischen Anlage in Abhängigkeit von dem mindestens einen zugehörigen feldgerätspezifischen Auslegungsparameter zu ermitteln, und wobei ein für die auszulegende Feldgerätstation geeignetes Feldgerät aus der Gruppe von Feldgeräten basierend auf einem Vergleich der wenigstens einen ermittelten Betriebsgröße mit einer Bewertungsbetriebsgröße auswählbar ist.

Das erfindungsgemäße Feldgerätmodul kann in Ausführungsformen der erfindungsgemäßen Rechenvorrichtungen einsetzbar sein und/oder in Ausführungsformen des erfindungsgemäßen Verfahrens implementiert sein, um in einer Simulationsumgebung wenigstens einen Abschnitt der auszulegenden Feldgerätstation und/oder der prozesstechnischen Anlage zu simulieren. Entsprechend kann das erfindungsgemäße Feldgerätmodul in bevorzugten Ausführungsformen einen oder mehrere Merkmale von Ausführungsformen des Verfahrens und/oder der Rechenvorrichtungen in beliebiger Kombination aufweisen.

Das Verfahren zum Auslegen einer Feldgerätstation, wie einer Stellarmatur, einer Pumpe oder dergleichen, für eine prozesstechnische Anlage, wie eine chemische Anlage, eine Lebensmittel verarbeitende Anlage, ein Kraftwerk oder dergleichen, dient im Allgemeinen dazu, eine Vielzahl von vorzugsweise aus einem Standardkomponenten-Baukasten auszuwählenden Feldgeräte virtuell zu testen, um insbesondere das optimale Feldgerät für die konkrete prozesstechnische Anlage auszuwählen. Beispielsweise umfasst das Feldgerät, dass ein Stellventil und einen vorzugsweise pneumatischen Stellantrieb, wobei ein Stellventilgehäuse mit dem Antriebsgehäuse über ein Joch ortsfest getragen sein kann. Das Stellventil kann in ein Rohrsystem der prozesstechnischen Anlage integriert sein. Im Inneren des Stellventilgehäuses kann ein Ventilsitz ortsfest an der Innenseite des Stellventilgehäuses befestigt sein. Der Ventilsitz kann mit einem Ventilglied des Stellventils kooperieren, das über eine Stellstange von dem pneumatischen Stellantrieb betätigbar ist. Die Stellstange kann sich durch eine Öffnung im Oberteil des Stellventilgehäuses längs des Jochs in eine Durchführung im Stellantriebsgehäuse erstrecken und mit einer die beiden Arbeitskammern des vorzugsweise pneumatischen Stellantriebs trennenden Membran fest verbunden sein. Der Stellantrieb kann eine Arbeitskammer und eine mit Druckfedern belegte Rückstellkammer aufweisen. Die pneumatische Arbeitskammer kann pneumatisch mit einem Stellungsregler verbunden sein, der an eine Druckluftquelle von etwa 6 bar angeschlossen sein kann. Der Stellungsregler kann einen pneumatischen Ausgang, der über eine Ausgangsleitung mit der pneumatischen Arbeitskammer gekoppelt sein kann, umfassen. Der Stellungsregler kann außerdem einen Positions- oder Stellungssensor aufweisen, der die Position des Ventilglieds über einen Hebelarm erfassen kann. Der Hebelarm kann als Abtastarm ausgebildet sein, um zeitdiskrete Positionssignale zu generieren, und drehbeweglich an der Stange befestigt sein. Vorteilhafte Ausgestaltungen der erfindungsgemäßen Ausführungsformen sind in den nachfolgenden Abbildungen dargestellt, wobei:
- Fig. 1: eine schematische Darstellung eines digitalen Abbilds einer prozesstechnischen Anlage und/oder einer Feldgerätstation zeigt, welche in einer Ausführungsform der vorliegenden Erfindung verwendbar ist;
- Fig. 2: eine schematische Darstellung der Funktionsweise des digitalen Abbilds nach Fig. 1 zeigt;
- Fig. 3: eine weitere schematische Darstellung der Funktionsweise des digitalen Abbilds nach Fig. 1 und Fig. 2 zeigt; und
- Fig. 4: ein Flussdiagramm eines Verfahrens gemäß einer Ausführungsform der vorliegenden Erfindung darstellt.

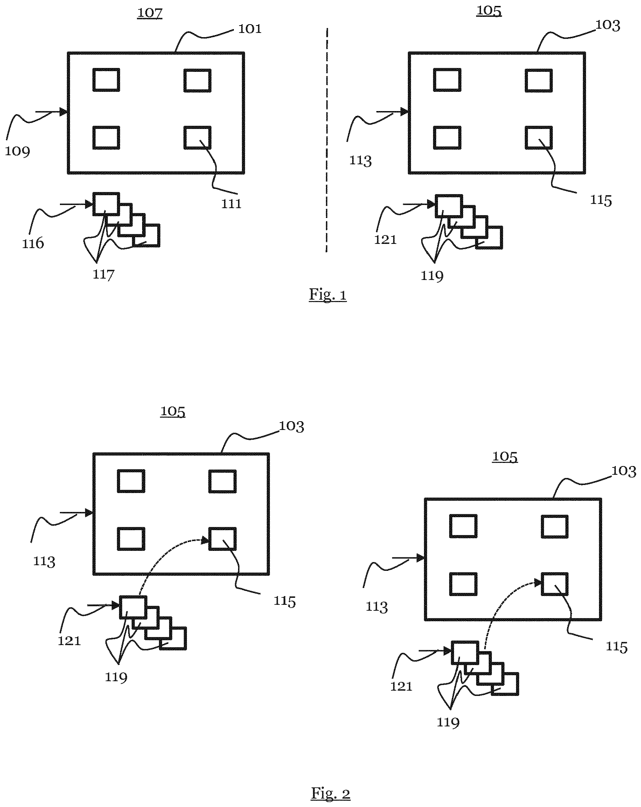

Fig. 1 zeigt eine schematische Darstellung eines digitalen Abbilds einer prozesstechnischen Anlage und/oder einer Feldgerätstation, welche in einer Ausführungsform der vorliegenden Erfindung verwendbar ist.

Eine prozesstechnische Anlage, wie eine chemischen Anlage, eine Lebensmittel verarbeitende Anlage, ein Kraftwerk oder dergleichen, kann durch betriebsspezifische Anlagenmerkmale, wie Art des Prozessmediums, Prozessfluidströmung, Anzahl von Feldgerätstationen, Anlagenumgebung oder dergleichen, spezifiziert sein, wobei die betriebsspezifischen Anlagenmerkmale verwendet werden, um die reale prozesstechnische Anlage 101 als digitales Abbild 103 auf einer virtuellen Ebene 105 darzustellen. Das digitale Abbild 103 bildet sämtliche betriebsspezifischen Anlagenmerkmale der prozesstechnischen Anlage 101 in Form eines funktionalen Datensatzes ab, derart, dass eine Simulation des digitalen Abbilds 103 auf virtueller Ebene 105 im Rahmen einer Fehlertoleranz dem Betrieb der realen prozesstechnischen Anlage 101 in der Realität (oder auf reeler Ebene 107) entspricht. Das digitale Abbild 103 der prozesstechnischen Anlage kann ferner mit der realen prozesstechnischen Anlage 101 derart verknüpft sein, dass jede Änderung von betriebsspezifischen Anlagenmerkmalen 109 der realen prozesstechnischen Anlage 101 direkt in dem digitalen Abbild 103 vorzugsweise mittels einer entsprechenden Änderung eines dem realen Anlagenmerkmal 109 zugeordneten digitalen Anlagenmerkmals 113 gespiegelt wird. Entsprechend kann auch von einem digitalen Zwilling gesprochen werden.

Das digitale Abbild 103 der prozesstechnischen Anlage kann daher zur Simulation und Optimierung des Betriebs der prozesstechnischen Anlage und der darin definierten Komponenten 111, von denen beispielhaft nur vier dargestellt sind, beispielsweise eine Feldgerätstation, verwendet werden. Insbesondere kann auch eine Simulation oder Optimierung hinsichtlich eines Auslegungsbereichs einer nicht vollständig spezifizierten Komponente der prozesstechnischen Anlage, beispielsweise der auszulegenden Feldgerätstation, durchgeführt werden, welche zum Einsatz in der realen prozesstechnischen Anlage 101 vorgesehen sein kann. Hierzu können betriebsspezifische Merkmale der auszulegenden Komponente in dem digitalen Abbild 103 derart variiert werden, dass eine optimale Auslegung der Komponente in der Realität bestimmbar ist.

In einer bevorzugten Ausführungsform der vorliegenden Erfindung ist hierzu ein variables Feldgerätmodul 115 vorgesehen, welches zur Simulation und optimalen Auslegung der auszulegenden Komponenten des digitalen Abbilds 103 der prozesstechnischen Anlage eingesetzt wird, derart, dass das Feldgerätmodul 115 eine Vielzahl möglicher Feldgeräte in der prozesstechnischen Anlage zu simulieren vermag. Die Vielzahl der Feldgeräte kann hierbei wiederum ein digitales Abbild entsprechender realer Feldgeräte sein. Das Feldgerätmodul 115 kann flexibel in Simulationsumgebungen für die prozesstechnische Anlage einsetzbar sein und kann als Baukasten oder Container für verfügbare Komponenten definiert sein, beispielsweise eine Produktpalette einer Komponente definieren, wodurch einerseits der gesamte verfügbare Auslegungsbereich als auch die jeweiligen Standardkomponenten zur optimalen Auslegung der Komponente angegeben sein können.

Durch Variation der einzelnen durch das Feldgerätmodul 115 repräsentierten Feldgeräte 119, die jeweils ein reales Feldgerät 117 virtuell abbilden, bei der Simulation des digitalen Abbilds 103 der prozesstechnischen Anlage, kann schließlich ein optimaler Betriebszustand oder ein Satz optimaler Betriebsgrößen ermittelt werden, wobei aus dem durch das Feldgerätmodul repräsentierten Standardfeldgeräte das geeignete Feldgerät zur optimalen Auslegung der realen Feldgerätstation ermittelt werden kann.

Im Allgemeinen empfangen die Feldgeräte 117 eine Eingangs-Betriebsgröße 116, die von dem Feldgerät 117 beeinflussbar ist. Entsprechend empfangen die virtuellen Feldgeräte 119 in der virtuellen Ebene 105 eine virtuelle Eingangs-Betriebsgröße 121, die der realen Eingangs-Betriebsgröße 116 zugeordnet ist. Bezugnehmend auf Fig. 2 ist das Simulieren des Betriebs der prozesstechnischen Anlage unter Verwendung des Feldgerätemoduls 115 schematisch dargestellt. Der Betrieb der abgebildeten prozesstechnischen Anlage wird für mindestens eines der Gruppe von virtuellen Feldgeräten 119 anhand eines festgelegten zugehörigen feldgerätespezifischen Auslegungsparameters simuliert, wobei der mittels der Bezugsziffer 123 versehene Pfeil andeuten soll, dass das wenigstens eine der Gruppe von virtuellen Feldgeräten 119 durch das Feldgerätmodul 115 abgebildet wird und jeweils der Betrieb der prozesstechnischen Anlage 103 simuliert wird.

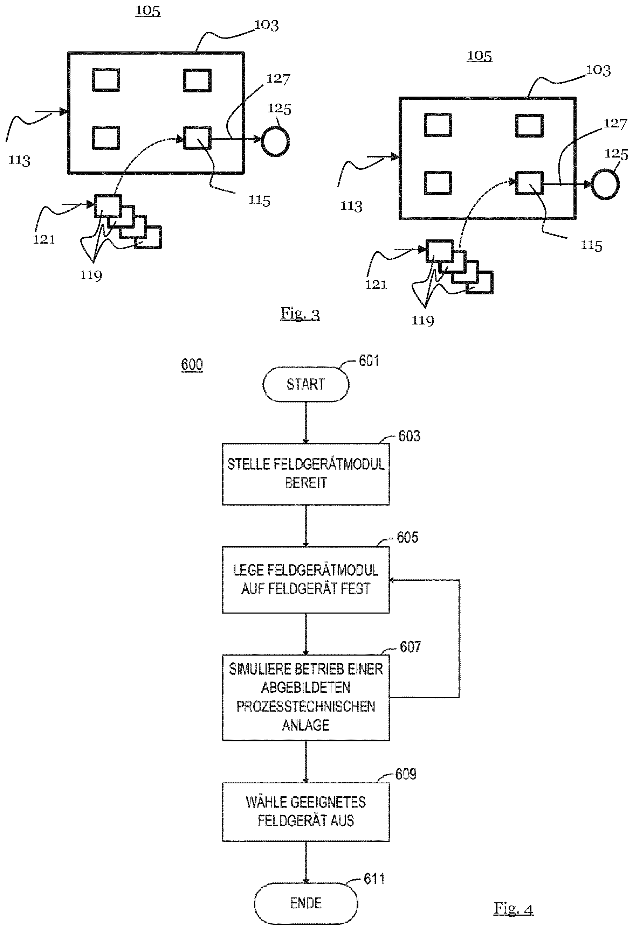

In Fig. 3 ist schematisch das Ermitteln wenigstens einer Betriebsgröße der abgebildeten prozesstechnischen Anlage 103 dargestellt. Die ermittelte Betriebsgröße 125, beispielsweise ein Druckwert p1, p2, steht an dem Feldgerätmodul 115 als Ausgangsgröße zur Verfügung, wobei das Ausgeben der ermittelten Betriebsgröße 125 schematisch durch den Pfeil 127 angedeutet ist.

Fig. 4 zeigt ein Flussdiagramm eines Verfahrens gemäß einer Ausführungsform der Erfindung.

Das Verfahren 600 kann zum Auslegen einer realen Feldgerätstation für eine prozesstechnische Anlage vorgesehen sein. Eine optimale Auslegung kann mithilfe einer Simulationsumgebung ermittelt werden, in die die prozesstechnischen Anlage mit der auszulegenden Feldgerätstation anhand von betriebsspezifischen Anlagenmerkmalen der prozesstechnischen Anlage und/oder der Feldgerätstation abgebildet ist.

Das Verfahren 600 kann in Schritt 601 beginnen und mit Schritt 603 fortfahren, um ein Feldgerätmodul zur Simulation wenigstens eines Abschnitts der Feldgerätstation in der Simulationsumgebung bereitzustellen. Das Feldgerätmodul kann eingerichtet sein, wenigstens ein Feldgerät aus einer Gruppe von Feldgeräten zu simulieren, wodurch wenigstens eine Betriebsgröße der abgebildeten prozesstechnischen Anlage beeinflussbar ist.

Das Verfahren 600 kann in Schritt 605 zunächst mindestens ein zu simulierendes Feldgerät aus der Gruppe von Feldgeräten und mindestens einen zugehörigen feldgerätspezifischen Auslegungsparameter festzulegen.

Ausgehend von der Festlegung (605) erfolgt in Schritt 607 eine Simulation des Betriebs der abgebildeten prozesstechnischen Anlage und der auszulegenden Feldgerätstation unter Verwendung des festgelegten Feldgerätmoduls, um für das zu simulierende mindestens eine Feldgerät wenigstens eine Betriebsgröße der abgebildeten prozesstechnischen Anlage in Abhängigkeit von dem mindestens einen zugehörigen feldgerätspezifischen Auslegungsparameter zu ermitteln. Der mindestens eine feldgerätspezifische Auslegungsparameter kann einen Auslegungsbereich spezifizieren, innerhalb dessen ein optimaler Betriebszustand ermittelt werden kann.

Gemäß einer beispielhaften Ausführungsform kann das Feldgerät beispielsweise ein Stellventil mit einem Ventil (Sitz und Kegel), einem Gehäuse des Ventils, einem pneumatischen Antrieb und einem Stellungsregler sein. Die Form des Ventils kann hierbei KVS-Werte, eine Reduzierung von Geräuschen oder Kavitation beeinflussen. Das Gehäuse des Ventils kann Auswirkungen auf den Druck, die Temperatur oder dergleichen haben. Der pneumatische Antrieb kann ferner durch einen Federbereich und/oder eine Membranfläche oder dergleichen spezifiziert sein und Einfluss auf diese Parameter haben. Der Stellungsregler kann als Vorfilter für die Dynamik des Stellventils aufgefasst werden und diese beeinflussen.

In der Simulationsumgebung kann ein digitaler Zwilling des von dem Feldgerätmodul repräsentierten Feldgeräts simuliert und optimiert werden, wobei das Feldgerätmodul eine Vielzahl von Standardfeldgeräten mit einem entsprechenden Auslegungsbereich repräsentiert, in dem eine Optimierung des Betriebs erfolgen kann. Die Optimierung kann einen oder mehrere Schritte umfassen.

So kann überprüft werden, ob ein Arbeitsbereich des Feldgeräts, beispielsweise des Ventils, passend gewählt ist. Beispielsweise kann ein gesamter Hub eines Stellventils ausgewertet werden, um eine möglichst gute Auslastung des Ventils zu erreichen. Als Randbedingungen der Simulation können kritische Betriebszustände angegeben sein, beispielsweise Kavitation, Geräuschpegel und dergleichen.

In einem weiteren Schritt der Optimierung können Unsicherheitsfaktoren und Betriebskosten überprüft werden. Beispielsweise kann eine Antriebsauslegung überprüft werden. Randbedingungen können hier durch einen Sicherheitsfaktor des Feldgeräts definiert sein, beispielsweise durch die verbrauchte Luftmenge im Betrieb.

In einem weiteren Schritt der Optimierung kann das Zeitverhalten überprüft werden, beispielsweise das Zeitverhalten eines Sollwerts in einem Führungsvorfilter eines Stellventils. Eine maximale Steigung von Signalen kann bestimmt und diese mit einem Sicherheitsfaktor beaufschlagt werden, um anschließend einen Vergleich mit einer Laufzeit durchzuführen. Falls eine maximale Änderungsgeschwindigkeit eine Laufzeit übersteig, kann die Laufzeit beeinflusst werden, beispielsweise durch eine Aktivierung in einem Vorfilter.

Vorzugsweise sollte eine Optimierung von Regelparameter derart geschehen, dass ein Fehler in einem Regelsignal über einen gesamten Betriebszustand minimiert wird. Auch hier können kritische Betriebszustände in jedem Simulationsschritt betrachtet werden. Nach erfolgter Simulation in Schritt 607 fährt das Verfahren 600 mit Schritt 605 iterativ fort, indem das Feldgerätmodul auf mindestens ein weiteres zu simulierendes Feldgerät festgelegt wird, um weitere optimale Betriebsgrößen der abgebildeten prozesstechnischen Anlage basierend auf einem geänderten Auslegungsbereich zu ermitteln.

Alternativ kann das Verfahren 600 mit Schritt 609 fortfahren und ein für die auszulegende Feldgerätstation geeignetes Feldgerät aus der Gruppe von Feldgeräten basierend auf einem Vergleich der wenigstens einen ermittelten Betriebsgröße mit einer Bewertungsbetriebsgröße auswählen. Beispielsweise kann am Ende der Simulation anhand von ermittelten Betriebsgrößen, beispielsweise einem optimalen Stellglied, ein Standardfeldgerät aus der Gruppe von Feldgeräten ermittelt werden, welches am nächsten an die ermittelte optimale Betriebsgröße herankommt, beispielsweise eine Standardkomponente mit einem möglichst passenden Standardstellglied. Das derart ausgewählte geeignete Feldgerät kann zum Auslegen der Feldgerätstation herangezogen werden. Das Verfahren 600 kann bei Schritt 611 enden.

### Bezugszeichenliste

- 101: prozesstechnische Anlage
- 103: virtuelles Abbild einer prozesstechnischen Anlage
- 105: virtuelle Ebene
- 107: reele Ebene
- 109: Anlagenmerkmal
- 111: Feldgerätstation
- 113: virtuelles Abbild eines Anlagenmerkmals
- 115: Feldgerätmodul
- 116: Eingangs-Betriebsgröße
- 117: Feldgeräte
- 119: virtuelles Abbild eines Feldgeräts
- 121: virtuelles Abbild einer Eingangs-Betriebsgröße
- 123, 127: Pfeil
- 125: ermittelte Betriebsgröße

## Patentansprüche

1. Verfahren zum Auslegen einer Feldgerätstation, wie einer Stellarmatur, einer Pumpe oder dergleichen, für eine prozesstechnische Anlage, wie eine chemische Anlage, eine Lebensmittel verarbeitende Anlage, ein Kraftwerk oder dergleichen, wobei die prozesstechnische Anlage mit der auszulegenden Feldgerätstation anhand von betriebsspezifischen Anlagenmerkmalen der prozesstechnischen Anlage, wie Art des Prozessmediums, Prozessfluidströmung, Anzahl von Feldgerätstationen, Anlagenumgebung oder dergleichen, in einer Simulationsumgebung abbildbar ist und wobei das Verfahren folgende Schritte umfasst:
Bereitstellen (603) eines Feldgerätmoduls zur Simulation wenigstens eines Abschnitts der Feldgerätstation in der Simulationsumgebung, wobei das Feldgerätmodul eingerichtet ist, wenigstens ein Feldgerät aus einer Gruppe von Feldgeräten zu simulieren, durch welches Feldgerät wenigstens eine Betriebsgröße, wie eine Regelgröße, beispielsweise Temperatur, Druck, Durchfluss oder dergleichen, der abgebildeten prozesstechnischen Anlage beeinflussbar ist;
Festlegen (605) des Feldgerätmoduls auf mindestens ein zu simulierendes Feldgerät aus der Gruppe von Feldgeräten und auf mindestens einen zugehörigen feldgerätspezifischen Auslegungsparameter, wie ein Geometrieparameter, ein Leistungsparameter, wie eine Stellantriebskraft, eine Pumpenleistung, ein KV-Wert oder dergleichen, wobei das Feldgerätemodul ein digitales Abbild eines Feldgeräts mit einem bestimmten Auslegungsbereich realisiert und wobei die Simulationsumgebung den feldgerätespezifischen Auslegungsparameter verwendet, um den Auslegungsbereich zu bestimmen;
Simulieren (607) des Betriebs der abgebildeten prozesstechnischen Anlage und der auszulegenden Feldgerätstation unter Verwendung des festgelegten Feldgerätmoduls, um für das zu simulierende mindestens eine Feldgerät wenigstens eine Betriebsgröße der abgebildeten prozesstechnischen Anlage in Abhängigkeit von dem mindestens einen zugehörigen feldgerätspezifischen Auslegungsparameter zu ermitteln; und
Auswählen (609) eines für die auszulegende Feldgerätstation geeigneten Feldgeräts aus der Gruppe von Feldgeräten basierend auf einem Vergleich der wenigstens einen ermittelten Betriebsgröße mit einer Bewertungsbetriebsgröße, **dadurch gekennzeichnet, dass** das Feldgerätmodul iterativ zu simulierende Feldgeräte aus der Gruppe von Feldgeräten festlegt und das geeignete Feldgerät auf der Grundlage des Vergleichs der ermittelten Betriebsgröße der abgebildeten prozesstechnischen Anlage basierend auf einem iterativ geänderten Auslegungsbereich automatisch auswählt.

2. Verfahren nach Anspruch 1, wobei sich die Feldgeräte aus der Gruppe von Feldgeräten in einem oder mehreren feldgerätspezifischen Auslegungsparametern unterscheiden.

3. Verfahren nach Anspruch 1 oder 2, ferner umfassend wiederholtes Festlegen (605) des Feldgerätmoduls auf mindestens ein weiteres zu simulierendes Feldgerät aus der Gruppe von Feldgeräten und mindestens einen zugehörigen feldgerätspezifischen Auslegungsparameter des weiteren Feldgeräts und wiederholtes Simulieren (607) des Betriebs der abgebildeten prozesstechnischen Anlage und der auszulegenden Feldgerätstation unter Verwendung des wiederholt festgelegten Feldgerätmoduls.

4. Verfahren nach einem der vorhergehenden Ansprüche, wobei das Feldgerätmodul eine Schnittstelle zur Simulationsumgebung aufweist, welche für das Festlegen (605) des Feldgerätmoduls auf ein zu simulierendes Feldgerät und auf mindestens einen zugehörigen feldgerätspezifischen Auslegungsparameter eingerichtet ist.

5. Verfahren nach einem der vorhergehenden Ansprüche, ferner umfassend Speichern, für jedes zu simulierende Feldgerät, der für das zu simulierende Feldgerät ermittelten wenigstens einen Betriebsgröße der abgebildeten prozesstechnischen Anlage und einer Zuordnung des zu simulierenden Feldgeräts zu der ermittelten wenigstens einen Betriebsgröße.

6. Verfahren nach einem der vorhergehenden Ansprüche, wobei das Auswählen (609) des geeigneten Feldgeräts aus der Gruppe von Feldgeräten ferner ein Vergleichen der gespeicherten Betriebsgrößen mit der Bewertungsbetriebsgröße aufweist.

7. Verfahren nach einem der vorhergehenden Ansprüche, wobei das Auswählen (609) ferner ein Ermitteln einer optimalen Betriebsgröße auf der Grundlage der gespeicherten Betriebsgrößen und ein Auswählen des der optimalen Betriebsgröße zugeordneten Feldgeräts als das geeignete Feldgerät aufweist.

8. Verfahren nach einem der vorhergehenden Ansprüche, wobei das Feldgerätmodul eine weitere Schnittstelle zur Simulationsumgebung aufweist, welche für eine Übergabe des mindestens einen feldgerätspezifischen Auslegungsparameters an die Simulationsumgebung eingerichtet ist.

9. Verfahren nach einem der vorhergehenden Ansprüche, wobei das Feldgerätmodul ferner Logik zum Simulieren des wenigstens einen Feldgeräts aus der Gruppe von Feldgeräten aufweist, wobei simulierte Betriebsgrößen des wenigstens einen Feldgerätes und/oder der abgebildeten prozesstechnischen Anlage über eine Simulationsschnittstelle des Feldgerätmoduls zwischen dem Feldgerätmodul und der Simulationsumgebung austauschbar sind.

10. Verfahren nach einem der vorhergehenden Ansprüche, wobei das Feldgerätmodul mindestens eine Speicherstruktur aufweist, welche Daten bereitstellt, welche die Feldgeräte aus der Gruppe von Feldgeräten spezifizieren.

11. Verfahren nach Anspruch 10, wobei die Daten der Speicherstruktur feldgerätspezifische Auslegungsparameter für jeweilige Feldgeräte aus der Gruppe von Feldgeräten spezifizieren.

12. Verfahren nach Anspruch 10 oder 11, wobei die Speicherstruktur ferner eine Logik zum Simulieren der jeweiligen Feldgeräte aus der Gruppe von Feldgeräten spezifiziert.

13. Verfahren nach einem der vorhergehenden Ansprüche, wobei das Feldgerätmodul eingerichtet ist, sich selbst auf mindestens ein zu simulierendes Feldgerät aus der Gruppe von Feldgeräten und mindestens einen zugehörigen feldgerätspezifischen Auslegungsparameter festzulegen.

14. Verfahren nach einem der vorhergehenden Ansprüche, wobei das Auswählen (609) des geeigneten Feldgeräts mittels einer selbstoptimierenden und selbstlernenden Logik erfolgt.

15. Verfahren nach einem der vorhergehenden Ansprüche, wobei das Feldgerätmodul eine Schnittstelle zu einer verteilten Rechenumgebung aufweist, welche eingerichtet ist, zumindest teilweise die jeweiligen Feldgeräte aus der Gruppe von Feldgeräten zu simulieren.

16. Verfahren nach einem der vorhergehenden Ansprüche, ferner umfassend Auslegen der Feldgerätstation für die prozesstechnische Anlage auf der Grundlage des ausgewählten geeigneten Feldgeräts und/oder des mindestens einen feldgerätspezifischen Auslegungsparameters des ausgewählten geeigneten Feldgeräts.

17. Ein oder mehrere Datenträger mit darauf gespeicherten Befehlen, die, wenn sie von einem oder mehreren Prozessoren einer Rechenvorrichtung ausgeführt werden, die Rechenvorrichtung einrichten, ein Verfahren nach einem der vorhergehenden Ansprüche durchzuführen.

18. Rechenvorrichtung, die eingerichtet ist, eine Feldgerätstation für eine prozesstechnische Anlage auszulegen, wobei die prozesstechnische Anlage mit der auszulegenden Feldgerätstation anhand von betriebsspezifischen Anlagenmerkmalen der prozesstechnischen Anlage in einer Simulationsumgebung abbildbar ist und wobei die Rechenvorrichtung Folgendes umfasst:
eine Komponente, eingerichtet zum Bereitstellen eines Feldgerätmoduls zur Simulation wenigstens eines Abschnitts der abgebildeten Feldgerätstation in der Simulationsumgebung, wobei das Feldgerätmodul eingerichtet ist, wenigstens ein Feldgerät aus einer Gruppe von Feldgeräten zu simulieren, durch welches Feldgerät wenigstens eine Betriebsgröße der abgebildeten prozesstechnischen Anlage beeinflussbar ist;
eine Komponente, eingerichtet zum Festlegen des Feldgerätmoduls auf ein zu simulierendes Feldgerät aus der Gruppe von Feldgeräten und auf mindestens einen zugehörigen feldgerätspezifischen Auslegungsparameter, wobei das Feldgerätemodul ein digitales Abbild eines Feldgeräts mit einem bestimmten Auslegungsbereich realisiert und wobei die Simulationsumgebung den feldgerätespezifischen Auslegungsparameter verwendet, um den Auslegungsbereich zu bestimmen;
eine Komponente, eingerichtet zum Simulieren des Betriebs der abgebildeten prozesstechnischen Anlage und der auszulegenden Feldgerätstation unter Verwendung des festgelegten Feldgerätmoduls, um für das zu simulierende Feldgerät wenigstens eine Betriebsgröße der abgebildeten prozesstechnischen Anlage in Abhängigkeit von dem mindestens einen zugehörigen feldgerätspezifischen Auslegungsparameter zu ermitteln, wobei das Feldgerätmodul iterativ zu simulierende Feldgeräte aus der Gruppe von Feldgeräten festlegt und das geeignete Feldgerät auf der Grundlage des Vergleichs der ermittelten Betriebsgröße der abgebildeten prozesstechnischen Anlage basierend auf einem iterativ geänderten Auslegungsbereich automatisch auswählt; und
eine Komponente, eingerichtet zum Auswählen eines für die auszulegende Feldgerätstation geeigneten Feldgeräts aus der Gruppe von Feldgeräten basierend auf einem Vergleich der wenigstens einen ermittelten Betriebsgröße mit einer Bewertungsbetriebsgröße.

## Claims

1. Method for designing a field device station, such as a control valve, a pump or the like, for a process plant, such as a chemical plant, a food processing plant, a power plant or the like, wherein the process plant with the filed device station to be designed is mappable in a simulation environment on the basis of operation-specific plant characteristics of the process plant, such as type of the process medium, process fluid flow, number of field device stations, plant environment or the like, and wherein the method comprises the following steps:
Providing (603) a field device module for simulating at least a section of the field device station in the simulation environment, wherein the field device module is configured to simulate at least one field device from a group of field devices, by means of which field device at least one operating variable, such as a controlled variable, for example temperature, pressure, flow rate or the like, of the mapped process plant is influenceable;
determining (605) the field device module to at least one field device to be simulated from the group of field devices and to at least one associated field device-specific design parameter, such as a geometry parameter, a performance parameter, such as an actuator force, a pump performance, a KV value or the like, wherein the field device module realizes a digital image of the field device with a specific design range and wherein the simulation environment uses the field device-specific design parameter to determine the design range;
simulating (607) the operation of the mapped process plant and the field device station to be designed using the set field device module to determine for the at least one field device to be simulated at least one operating variable of the mapped process plant depending on the at least one associated field device-specific design parameter; and
selecting (609) a field device suitable for the field device station to be designed from the group of field devices based on a comparison of the at least one determined operating variable with an evaluation operating variable, **characterized in that** the field device module iteratively determines field devices to be simulated from the group of field devices and automatically selects the suitable field device based on the comparison of the determined operating variable of the mapped process plant based on an iteratively changed design range.

2. Method according to claim 1, wherein the field devices from the group of field devices differ in one or more field device-specific design parameters.

3. Method according to claim 1 or 2, further comprising repeatedly determining (605) the field device module to at least one further field device to be simulated from the group of field devices and at least one associated field device-specific design parameter of the further field device and repeatedly simulating (607) the operation of the mapped process plant and the field device station to be designed using the repeatedly determined field device module.

4. Method according to one of the preceding claims, wherein the field device module comprises an interface to the simulation environment, which is arranged for the determining (605) of the field device module to a field device to be simulated and to at least one associated field device-specific design parameter.

5. Method according to one of the preceding claims, further comprising storing, for each field device to be simulated, the at least on operating variable of the mapped process plant determined for the field device to be simulated and an assignment of the field device to be simulated to the determined at least one operating variable.

6. Method according to one of the preceding claims, wherein the selecting (609) of the suitable field device from the group of field devices further comprises comparing of the stored operating variable with the evaluation operating variable.

7. Method according to one of the preceding claims, wherein the selecting (609) further comprises determining an optimal operating variable based on the stored operating variables and selecting the field device associated with the optimal operating variable as the suitable field device.

8. Method according to one of the preceding claims, wherein the field device module comprises a further interface to the simulation environment, which is arranged for a transfer of the at least one field device-specific design parameter to the simulation environment.

9. Method according to one of the preceding claims, wherein the field device module further comprises logic for simulating the at least one field device from the group of field devices, wherein the simulated operating variable of the at least one field device and/or of the mapped process plant are exchangeable between the field device module and the simulation environment via a simulation interface of the field device module.

10. Method according to one of the preceding claims, wherein the field device module comprises at least one storing structure, which provides data, which specifies the field devices from the group of field devices.

11. Method according to claim 10, wherein the data of the storing structure specifies field device-specific design parameters for respective field devices from the group of field devices.

12. Method according to claim 10 or 11, wherein the storing structure further specifies a logic for simulating of the respective field devices from the group of field devices.

13. Method according to one of the preceding claims, wherein the field device module is arranged to determine itself to at least one field device to be simulated from the group of field devices and at least one associated field-device specific design parameter.

14. Method according to one of the preceding claims, wherein the selecting (609) of the suitable field device is performed by means of a self-optimizing and self-learning logic.

15. Method according to one of the preceding claims, wherein the field device module comprises an interface to a distributed computing environment, which is configured to at least partly simulate the respective field devices from the group of field devices.

16. Method according to one of the preceding claims, further comprising designing of the field device station for the process plant based on the selected suitable field device and/or the at least one field device-specific design parameter of the selected suitable field device.

17. One or more data carriers with instructions stored thereon, that, when executed by one or more processors of a computing device, enable the computing device to perform a method according to one of the preceding claims.

18. Computing device, that is arranged to design a field device station for a process plant, wherein the process plant with the field device station to be designed is mappable in a simulation environment on the basis of operation-specific plant characteristics of the process plant and wherein the computing device comprises:
A component configured for providing a field device module for simulating at least one section of the mapped field device station in the simulation environment, wherein the field device module is configured to simulate at least one field device from a group of field devices, by means of which field device at least one operating variable of the mapped process plant is influenceable;
a component configured for determining the field device module to a field device to be simulated from the group of field devices and to at least one associated field device-specific design parameter, wherein the field realizes a digital image of a field device with a specific design range and wherein the simulation environment uses the field device-specific design parameter to determine the design range;
a component configured for simulating the operation of the mapped process plant and the field device station to be designed using the determined field device module to determine for the field device to be simulated at least one operating variable of the mapped process plant depending on the at least one associated field device-specific design parameter, wherein the field device module iteratively determines field devices to be simulated from the group of field devices and automatically selects the suitable field device based on the comparison of the determined operating variable of the mapped process plant based on an iteratively changed design range; and
a component configured for selecting of a field device suitable for the field device station to be designed from the group of field devices based on a comparison of the at least one determined operating variable with an evaluation operating variable.

## Revendications

1. Procédé de conception d'un poste d'équipement de terrain, tel qu'une vanne de réglage, une pompe ou analogues pour une installation technique de procédé, telle qu'une installation chimique, une installation de traitement de produits alimentaires, une centrale électrique ou analogues, l'installation technique de procédé étant reproductible dans un environnement de simulation avec le poste d'équipement de terrain à concevoir à l'aide de caractéristiques spécifiques au fonctionnement de l'installation technique de procédé, telles que le type de milieu de processus, l'écoulement du fluide de processus, le nombre de postes d'équipements de terrain, l'environnement de l'installation ou analogues et le procédé comprenant les étapes suivantes, consistant à :
mettre à disposition (603) un module d'équipement de terrain pour la simulation d'au moins une partie du poste d'équipement de terrain dans l'environnement de simulation, le module d'équipement de terrain étant aménagé pour simuler au moins un équipement de terrain d'un groupe d'équipements de terrain, par lequel équipement de terrain au moins une grandeur de fonctionnement, telle qu'une grandeur de réglage, par exemple une température, une pression, un débit ou similaire de l'installation technique de procédé est influençable ;
définir (605) le module d'équipement de terrain pour au moins un équipement de terrain qui doit être simulé du groupe d'équipements de terrain et pour au moins un paramètre de conception associé, spécifique à l'équipement de terrain, tel qu'un paramètre géométrique, un paramètre de puissance, comme une force d'actionneur, une puissance de pompe, un coefficient KV ou analogues, le module d'équipement de terrain réalisant une reproduction d'un équipement de terrain avec une plage de conception déterminée et l'environnement de simulation utilisant le paramètre de conception spécifique à l'équipement de terrain, pour déterminer la plage de conception ;
simuler (607) le fonctionnement de l'installation technique de procédé reproduite et du poste d'équipement de terrain à concevoir en utilisant le module d'équipement de terrain défini, pour rechercher pour l'au moins un équipement de terrain qui doit être simulé au moins une grandeur de fonctionnement de l'installation technique de procédé reproduite, en fonction de l'au moins un paramètre de conception associé, spécifique à l'équipement de terrain ; et sélectionner (609) dans le groupe d'équipements de terrain un équipement de terrain adapté pour le poste d'équipement de terrain à concevoir, sur la base d'une comparaison de l'au moins une grandeur de fonctionnement recherchée avec une grandeur de fonctionnement d'évaluation, **caractérisé en ce que** le module d'équipement de terrain définit dans le groupe d'équipements de terrain des équipements de terrain à simuler de manière itérative et sélectionne automatiquement l'équipement de terrain adapté sur le fondement de la comparaison de la grandeur de fonctionnement recherchée de l'installation technique de procédé reproduite, sur la base d'une plage de conception modifiée de manière itérative.

2. Procédé selon la revendication 1, les équipements de terrain du groupe d'équipements de terrain se différenciant par un ou plusieurs paramètres de conception spécifiques à l'équipement de terrain.

3. Procédé selon la revendication 1 ou 2, comprenant par ailleurs une définition (605) répétée du module d'équipement de terrain pour au moins un autre équipement de terrain du groupe d'équipements de terrain qui doit être simulé et au moins paramètre de conception associé spécifique à l'équipement de terrain pour l'autre équipement de terrain et une simulation (607) répétée du fonctionnement de l'installation technique de procédé reproduite et du poste d'équipement de terrain à concevoir, en utilisant le module d'équipement de terrain défini de manière répétée.

4. Procédé selon l'une quelconque des revendications précédentes, le module d'équipement de terrain comportant une interface vers l'environnement de simulation, laquelle est aménagée pour la définition (605) du module d'équipement de terrain pour un équipement de terrain qui doit être simulé et pour au moins un paramètre de conception associé.

5. Procédé selon l'une quelconque des revendications précédentes, comprenant par ailleurs la mémorisation, pour chaque équipement de terrain qui doit être simulé de l'au moins une grandeur de fonctionnement de l'installation technique de procédé reproduite pour l'équipement de terrain qui doit être simulé et une association de l'équipement de terrain qui doit être simulé à l'au moins une grandeur de fonctionnement recherchée.

6. Procédé selon l'une quelconque des revendications précédentes, la sélection (609) de l'équipement de terrain adapté dans le groupe d'équipements de terrain comportant par ailleurs une comparaison des grandeurs de fonctionnement mémorisées avec la grandeur de fonctionnement d'évaluation.

7. Procédé selon l'une quelconque des revendications précédentes, la sélection (609) comportant par ailleurs une recherche d'une grandeur de fonctionnement optimum sur le fondement des grandeurs de fonctionnement mémorisées et une sélection de l'équipement de terrain associé à la grandeur de fonctionnement optimum, comme étant l'équipement de terrain adapté.

8. Procédé selon l'une quelconque des revendications précédentes, le module d'équipement de terrain comportant une autre interface vers l'environnement de simulation, laquelle est aménagée pour transmettre à l'environnement de simulation l'au moins un paramètre de conception spécifique à l'équipement de terrain.

9. Procédé selon l'une quelconque des revendications précédentes, le module d'équipement de terrain comportant par ailleurs une logique pour simuler l'au moins un équipement de terrain du groupe d'équipements de terrain, des grandeurs de fonctionnement simulées de l'au moins un équipement de terrain et / ou de l'installation technique de procédé reproduite étant échangeables entre le module d'équipement de terrain et l'environnement de simulation, par l'intermédiaire d'une interface de simulation du module d'équipement de terrain.

10. Procédé selon l'une quelconque des revendications précédentes, le module d'équipement de terrain comportant au moins une structure de mémoire, laquelle met à disposition des données qui spécifient les équipements de terrain du groupe d'équipements de terrain.

11. Procédé selon la revendication 10, les données de la structure de mémoire spécifiant des paramètres de conception spécifiques à l'équipement de terrain, pour des équipements de terrain respectifs du groupe d'équipements de terrain.

12. Procédé selon la revendication 10 ou 11, la structure de mémoire spécifiant par ailleurs une logique pour la simulation des équipements de terrain respectifs du groupe d'équipements de terrain.

13. Procédé selon l'une quelconque des revendications précédentes, le module d'équipement de terrain étant aménagé pour se définir lui-même pour un équipement de terrain qui doit être simulé du groupe d'équipements de terrain et pour au moins un paramètre de conception associé, spécifique à l'équipement de terrain.

14. Procédé selon l'une quelconque des revendications précédentes, la sélection (609) de l'équipement de terrain adapté s'effectuant au moyen d'une logique d'auto-optimisation et d'auto-apprentissage.

15. Procédé selon l'une quelconque des revendications précédentes, le module d'équipement de terrain comportant une interface vers un environnement informatique distribué, laquelle est aménagée pour simuler au moins partiellement les équipements de terrain respectifs du groupe d'équipements de terrain.

16. Procédé selon l'une quelconque des revendications précédentes, comprenant par ailleurs la conception du poste d'équipement de terrain pour l'installation technique de procédé sur le fondement de l'équipement de terrain adapté sélectionné et / ou de l'au moins un paramètre de conception spécifique à l'équipement de terrain de l'équipement de terrain adapté sélectionné.

17. Un ou plusieurs supports de données dotés d'instructions qui y sont mémorisées, qui lorsqu'ils sont exécutés par un ou plusieurs processeurs d'un système informatique, aménagent le système informatique pour réaliser un procédé selon l'une quelconque des revendications précédentes.

18. Système informatique qui est aménagé pour concevoir un poste d'équipement de terrain pour une installation technique de procédé, l'installation technique de procédé étant reproductible dans un environnement de simulation avec le poste d'équipement de terrain à concevoir à l'aide de caractéristiques spécifiques au fonctionnement de l'installation technique de procédé et le système informatique comprenant ce qui suit :
un composant, aménagé pour mettre à disposition un module d'équipement de terrain pour la simulation d'au moins une partie du poste d'équipement de terrain reproduit dans l'environnement de simulation, le module d'équipement de terrain étant aménagé pour simuler au moins un équipement de terrain du groupe d'équipements de terrain, par lequel équipement de terrain au moins une grandeur de fonctionnement de l'installation technique de procédé reproduite est influençable ;
un composant, aménagé pour définir le module d'équipement de terrain pour un équipement de terrain qui doit être simulé du groupe d'équipements de terrain et pour au moins un paramètre de conception associé, spécifique à l'équipement de terrain, le module d'équipement de terraine réalisant une reproduction numérique d'un équipement de terrain avec une plage de conception déterminée, l'environnement de simulation utilisant le paramètre de conception spécifique à l'équipement de terrain pour déterminer la plage de conception ;
un composant, aménagé pour simuler le fonctionnement de l'installation technique de procédé et du poste d'équipement de terrain à concevoir, en utilisant le module d'équipement de terrain défini, pour rechercher pour l'équipement de terrain à concevoir l'au moins une grandeur de fonctionnement de l'installation technique de procédé, au moins en fonction de l'au moins un paramètre de conception associé, spécifique à l'équipement de terrain, le module d'équipement de terrain définissant des équipements de terrain à simuler de manière itérative du groupe d'équipements de terrain et sélectionnant automatiquement l'équipement de terrain adapté sur le fondement de la comparaison de la grandeur de fonctionnement recherchée de l'installation technique de procédé reproduite, sur la base d'une plage de conception modifiée de manière itérative ; et
un composant, aménagé pour sélectionner dans le groupe d'équipements de terrain un équipement de terrain adapté pour le poste d'équipement de terrain à concevoir, sur la base d'une comparaison de l'au moins une grandeur de fonctionnement recherchée avec une grandeur de fonctionnement d'évaluation.
